# EUROPÄISCHE PATENTSCHRIFT

(11) **EP 4 154 053 B1**
(45) Veröffentlichungstag und Bekanntmachung des Hinweises auf die Patenterteilung: **05.06.2024**
(21) Anmeldenummer: 21721468.3
(22) Anmeldetag: 22.04.2021
(51) Int. Cl.: H04N 5/00, H04N 9/00, G02B 27/10, G02B 27/12, G02B 27/00

(54) **KAMERAVORRICHTUNG ZUM ERZEUGEN EINES ABBILDS EINER UMGEBUNG SOWIE SCHEINWERFERANORDNUNG**
CAMERA APPARATUS FOR GENERATING AN IMAGE REPRESENTATION OF A SURROUND AND HEADLIGHT ARRANGEMENT
APPAREIL DE CAMÉRA POUR GÉNÉRER UNE REPRÉSENTATION D'IMAGE D'UN CADRE ET AGENCEMENT DE PHARE

(30) Priorität: 19.05.2020 DE 102020113579
(43) Veröffentlichungstag der Anmeldung: 29.03.2023
(73) Patentinhaber: Audi AG, 85045 Ingolstadt (DE)
(72) Erfinder: MOLL, Tobias, 85055 Ingolstadt (DE); KLUG, Markus, 85057 Ingolstadt (DE); SCHEUCHENPFLUG, Johannes, 85107 Baar-Ebenhausen (DE)
(74) Vertreter: Hofstetter, Schurack & Partner
(86) Internationale Anmeldenummer: PCT/EP2021/060465
(87) Internationale Veröffentlichungsnummer: WO 2021/233639

(56) Entgegenhaltungen:
- EP-B1- 1 168 007
- WO-A1-2020/225123
- US-A1- 2015 293 645
- US-A1- 2019 025 432
- US-A1- 2019 086 674

## Beschreibung

Die Erfindung betrifft eine Kameravorrichtung zum Erzeugen oder Erfassen von wenigstens einem Abbild zumindest eines Objekts in einer Umgebung. Die Erfindung betrifft auch eine Scheinwerferanordnung für ein Kraftfahrzeug, welche eine Scheinwerferlichtquelle und die Kameravorrichtung umfasst.

In der Erfindung geht es insbesondere darum, ein Abbild eines bestimmten oder gewünschten Objekts in der Umgebung zu erfassen. Dazu ist vorgesehen, dass das gewünschte Objekt mittels einer Beleuchtungseinrichtung mit einem vorbestimmten Beleuchtungslicht beleuchtet wird, welches bei Reflexion an dem Objekt von einer Bilderfassungseinrichtung, wie beispielsweise eine Fotokamera oder Videokamera, mittels eines Bildsensors erfasst werden kann. Der Bildsensor kann das auftreffende Licht in bekannter Weise in ein Bildsignal umwandeln. Das Bildsignal kann anschließend bei geeigneter Verarbeitung durch eine Anzeigeeinrichtung, wie zum Beispiel ein Display, zu dem gewünschten Abbild des Objekts der Umgebung zusammengesetzt oder rekonstruiert werden.

Vorzugsweise ist die Kameravorrichtung als sogenannte "Holocam" ausgebildet. Das heißt, es werden holografisch-optische Elemente (HOE) genutzt, um einerseits das mittels der Beleuchtungseinrichtung bereitgestellte Beleuchtungslicht an das gewünschte Objekt zu übertragen und andererseits das an dem Objekt reflektierte Beleuchtungslicht an die Bilderfassungseinrichtung umzulenken. Die Bilderfassungseinrichtung und die Beleuchtungseinrichtung brauchen somit nicht in einer optischen Achse mit dem aufzunehmenden Objekt in der Umgebung liegen.

Um die vorgenannte "Holocam" zu realisieren, umfasst die Kameravorrichtung ein Lichtleitmedium, welches ein erstes Ablenkelement und ein zweites Ablenkelement umfasst. Das Lichtleitmedium kann beispielsweise als Platte oder Scheibe aus Glas oder Kunststoff ausgebildet sein. Das erste und zweite Ablenkelement sind bevorzugt entlang einer Längserstreckungsrichtung des Lichtleitmediums beabstandet zueinander angeordnet. Durch das erste und zweite Ablenkelement ist dabei die Ablenkfunktion oder Lichtlenkfunktion der Kameravorrichtung bereitgestellt. Das heißt, das erste und zweite Ablenkelement sind bevorzugt als diffraktive optische Elemente und/oder die vorgenannten holografisch-optischen Elemente, beispielsweise als Volumenhologramme, realisiert. Das Lichtleitmedium ist ausgebildet, Licht, welches mittels dem ersten und/oder zweiten Ablenkelement in einem entsprechenden Winkel in das Lichtleitmedium eingekoppelt wurde, mittels interner Reflexion, insbesondere Totalreflexion, zwischen dem ersten und zweiten Ablenkelement zu übertragen oder weiterzuleiten. Bei dem übertragbaren Licht handelt es sich bevorzugt um das vorgenannte Beleuchtungslicht. Um das Beleuchtungslicht über das Lichtleitmedium zum Beleuchten des Objekts in der Umgebung bereitzustellen, umfasst die Kameravorrichtung somit auch die Beleuchtungseinrichtung, welche ausgebildet ist, das Beleuchtungslicht an das zweite Ablenkelement bereitzustellen. Das zweite Ablenkelement ist nun ausgebildet, das Beleuchtungslicht zum Übertragen an das erste Ablenkelement in das Lichtleitmedium einzukoppeln. Das erste Ablenkelement ist entsprechend ausgebildet, das mittels der internen Reflexion in dem Lichtleitmedium übertragene Beleuchtungslicht zum Beleuchten des Objekts wiederum aus dem Lichtleitmedium auszukoppeln. Um das Abbild des jeweiligen Objekts in der Umgebung zu erzeugen, umfasst die Kameravorrichtung auch noch die vorgenannte Bilderfassungseinrichtung. Um das an dem jeweiligen Objekt reflektierte Beleuchtungslicht nun von dem Objekt wiederum an die Bilderfassungseinrichtung zu übertragen, ist das erste Ablenkelement ausgebildet, bevorzugt das reflektierte Beleuchtungslicht zum Übertragen an das zweite Ablenkelement wiederum in das Lichtleitmedium einzukoppeln.

Entsprechend ist das zweite Ablenkelement ausgebildet, das mittels der internen Reflexion in dem Lichtleitmedium übertragene Beleuchtungslicht zum Übertragen an die Bilderfassungseinrichtung wiederum aus dem Lichtleitmedium auszukoppeln.

Die genannten Ablenkelemente sind somit zum bidirektionalen Umlenken oder Ablenken des Beleuchtungslichts ausgebildet. Das heißt, jedes der Ablenkelemente kann sowohl das (reflektierte) Beleuchtungslicht in das Lichtleitmedium einkoppeln, als auch das (reflektierte) Beleuchtungslicht aus dem Lichtleitmedium auskoppeln.

Ein Beispiel für eine Ausgestaltung einer "Holocam" ist aus der DE 10 2017 217 193 A1 bekannt. Hierbei wird die "Holocam" als ein sogenanntes Head-up-Display in einem Fahrzeug genutzt. Dabei ist in einem transparenten Teilbereich einer Fahrzeugscheibe ein Volumenhologramm als holografische Folie mit wenigstens zwei optischen Elementen zum Umlenken von Licht angeordnet. Dabei wird einerseits Licht aus der Umgebung mittels der optischen Elemente in die Scheibe eingekoppelt und zu einer Kamera hin umgelenkt. Die Kamera kann aus dem einfallenden Licht dann ein Bildsignal erzeugen, welches an einen Projektor bereitgestellt wird. Dieser erzeugt aus dem Bildsignal ein Projektionslicht. Das Projektionslicht wird wiederum über die optischen Elemente in die Scheibe eingekoppelt und anschließend zur Anzeige für einen Fahrer des Fahrzeugs zur Darstellung eines Abbilds der Umgebung auf der Scheibe ausgekoppelt.

Hierbei ist somit kein gezieltes Beleuchten des gewünschten Objekts in der Umgebung vorgesehen.

Anstelle eines holografisch-optischen Elements zum Umlenken von Licht, kann, wie in der US 2009/0153712 A1 offenbart, beispielsweise auch eine Linse genutzt werden. Über die Linse kann einerseits ein Beleuchtungslicht von einer Beleuchtungseinheit an die Umgebung abgegeben werden und andererseits das reflektierte Beleuchtungslicht aus der Umgebung an eine eine Kamera bereitgestellt werden. Nachteil einer solchen Linse ist es jedoch, dass die Fertigung, insbesondere das Schleifen der Linse, meist aufwendig ist.

Deshalb ist es vorteilhaft, anstelle einer Linse zum Umlenken des Beleuchtungslichts die vorgenannten holografisch-optischen Elemente zu nutzen. Ein entsprechendes System ist zum Beispiel aus der US 2019/0086674 A1 bekannt. Hier ist ein Head-Mounted-Display (kopfmontiertes Display) beschrieben, welches eine "Holocam" nutzt, um einem Träger des Head-Mounted-Displays ein gewünschtes Anzeigebild in Abhängigkeit von einer Blickrichtung des Trägers anzuzeigen. Dabei werden entsprechende holografisch-optischen Elemente genutzt, um zur Blickrichtungsdetektion infrarotes Licht in ein Lichtleitmedium zum Bereitstellen an das Auge des Benutzers ein- und wieder auszukoppeln. Das Am Auge reflektierte Licht kann dann wiederum über die holografisch-optischen Elemente in das Lichtleitmedium ein- und an eine Kamera ausgekoppelt werden, um die Blickrichtung zu bestimmen. In Abhängigkeit von der Blickrichtung kann dann ein Projektor angesteuert werden, welcher ein gewünschtes Anzeigebild in Form eines Projektionslicht erzeugt. Da Projektionslicht wird dabei von dem Projektor mittels der holografisch-optischen Elemente zum Anzeigen an den Träger umgelenkt.

Hierbei kann es jedoch zu unerwünschten Störeffekten beim Umlenken des infraroten Lichts während der Blickrichtungserkennung kommen. Die Störeffekte können zum Beispiel Störlichter, wie ein Umgebungslicht oder eine Reflexion des infraroten Lichts zum Beispiel an einer Brille des Trägers des Head-Mounted-Displays sein. Dadurch kann es zur Überbelichtung des Bildsensors der Kamera kommen, sodass die Blickrichtungsbestimmung nicht mehr zuverlässig erfolgen kann.

Ferner ist aus der US 2019/025432 A1 eine Fahrzeugbilderfassungsvorrichtung bekannt, welche eine Lichteinheit, Bilderfassungseinheiten sowie eine Steuervorrichtung umfasst. Die Lichteinheit soll ein gepulstes Licht in einer vorbestimmten Richtung emittieren. Die Bilderfassungseinheiten weisen eine Hochgeschwindigkeitskamera und einen Lichtvervielfacher auf, wobei die Lichteinheit und die Bilderfassungseinheiten in einem Schaltbetrieb zeitlich versetzt zueinander einen aktivierten Zustand zum Bereitstellen eines gepulsten Lichts und zum Erfassen des reflektierten gepulsten Lichts aufweisen.

Aufgabe der vorliegenden Erfindung ist es, die zuvor beschriebene Kameravorrichtung derart weiterzuentwickeln, dass gezielt nur ein oder mehrere vorbestimmte Objekte in der Umgebung erfasst werden und Störeffekte auf dem resultierenden Abbild zu vermeiden.

Die Aufgabe wird durch die Gegenstände der unabhängigen Patentansprüche gelöst. Vorteilhafte Weiterbildungen der Erfindung sind durch die abhängigen Patentansprüche, die folgende Beschreibung sowie die Figuren offenbart.

Die Erfindung basiert dabei auf der Erkenntnis, dass bei einer dauerhaften oder kontinuierlichen Beleuchtung der Umgebung das Beleuchtungslicht immer an mehreren Objekten, die sich in unterschiedlichen Gegenstandsebenen oder Schnittebenen der Umgebung befinden, reflektiert wird. Das heißt, das Beleuchtungslicht wird aus unterschiedliche weit von der Kameravorrichtung entfernten Tiefenebenen zurückgeworfen. Eine gezielte Beleuchtung und Erfassung eines einzelnen Objekts in der Umgebung ist somit nicht möglich. Mit Gegenstandsebene im Sinne der Erfindung ist dabei insbesondere eine Ebene im Raum gemeint, welche jeweils bevorzugt parallel zu einer Sensorebene eines Bildsensors der Bilderfassungseinrichtung ausgerichtet ist. Dabei umfasst die mittels der Kameravorrichtung zu erfassende Umgebung in der Regel mehrere solcher Schnittebenen, die aus Sicht der Kameravorrichtung in unterschiedlichen Entfernungen zu der Kameravorrichtung nacheinander angeordnet sind. Indem nun zusätzlich auch die Bilderfassungseinrichtung kontinuierlich das reflektierte Beleuchtungslicht aus der Umgebung erfasst, ergibt sich somit in der Regel ein Abbild der Umgebung auf dem eine Vielzahl von Objekten in unterschiedlichen Schnittebenen dargestellt sind. Ziel der Erfindung ist es nun das Beleuchtungslicht gezielt an jeweils eine dieser Schnittebenen bereitzustellen, um nur ein Objekt, welches sich in der jeweiligen Schnittebene befindet, zu beleuchten und somit zu erfassen. Objekte, die sich in anderen als der gewünschten Schnittebene befinden, sollen hingegen nicht erfasst und somit auf dem resultierenden Abbild ausgeblendet oder nicht dargestellt sein.

Um dies zu realisieren, ist vorgesehen, dass die zuvor beschriebene Kameravorrichtung zusätzlich noch eine Steuereinrichtung umfasst, die ausgebildet ist, die Beleuchtungseinrichtung und die Bilderfassungseinrichtung in einem vorbestimmten Schaltbetrieb zu betreiben. Das heißt, die Beleuchtungseinrichtung und die Bilderfassungseinrichtung weisen jeweils einen eingeschalteten Schaltzustand und einen ausgeschalteten Schaltzustand auf. In dem eingeschalteten oder aktivierten Zustand ist die Bilderfassungseinrichtung dabei ausgebildet, das reflektierte Beleuchtungslicht zu erfassen. Im ausgeschalteten oder deaktivierten Zustand erfolgt hingegen kein Erfassen des Beleuchtungslichts. Entsprechend ist die Beleuchtungseinrichtung in dem aktivierten oder eingeschalteten Zustand ausgebildet, das Beleuchtungslicht bereitzustellen, während in dem ausgeschalteten oder deaktivierten Zustand mittels der Beleuchtungseinrichtung das Beleuchtungslicht nicht bereitgestellt wird. Gemäß dem Schaltbetrieb ist die Steuereinrichtung nun ausgebildet, die Bilderfassungseinrichtung und die Beleuchtungseinrichtung, zum Beispiel nach einem vorbestimmten Schaltmuster, von dem eingeschalteten Schaltzustand in den ausgeschalteten Schaltzustand zu schalten und umgekehrt. Der Schaltbetrieb, das heißt, zum Beispiel das Schaltmuster ist insbesondere von dem Fachmann festlegbar. Der Schaltbetrieb kann dabei in Abhängigkeit von der Entfernung der Schnittebene zu der Kameravorrichtung eingestellt werden.

Der Schaltbetrieb ist dabei jedoch so gewählt, dass die Beleuchtungseinrichtung und die Bilderfassungseinrichtung zeitlich versetzt zueinander, das heißt, insbesondere zeitlich beabstandet nacheinander, in den eingeschalteten oder aktivierten Schaltzustand zum Bereitstellen des Beleuchtungslichts und zum Erfassen des reflektierten Beleuchtungslichts versetzt sind. Anders ausgedrückt, sind also ein vorbestimmtes oder fest definiertes Beleuchtungsintervall, innerhalb welchem die Beleuchtungseinrichtung das Beleuchtungslicht bereitstellt, und ein vorbestimmtes oder fest definiertes Aufnahmeintervall, innerhalb welchem die Bilderfassungseinrichtung das reflektierte Umgebungslicht erfasst, zeitlich zueinander versetzt. Das Beleuchtungs- und das Aufnahmeintervall sind dabei bevorzugt durch ein vorbestimmtes Pausenintervall voneinander abgegrenzt. Das Pausenintervall stellt dabei einen Zeitraum dar, in welchem die Beleuchtungseinrichtung und die Bilderfassungseinrichtung gleichzeitig in den deaktivierten Zustand geschaltet sind. Das heißt, es erfolgt somit entweder die Beleuchtung des Objekts oder das Erfassen des reflektierten Beleuchtungslichts.

Dadurch stellt die Beleuchtungseinrichtung das Beleuchtungslicht sozusagen in definierten Beleuchtungsimpulsen an die Umgebung bereit und die Bilderfassungseinrichtung erfasst nur denjenigen Anteil des Beleuchtungslichts, welcher innerhalb des Aufnahmeintervalls an die Bilderfassungseinrichtung zurückgeworfen wird. Dieser Vorgang kann auch als sogenanntes "gated imaging" bezeichnet werden. Eine jeweilige Dauer des Beleuchtungsintervalls und des Aufnahmeintervalls kann dabei in Abhängigkeit von einer Entfernung der Schnittebene, beziehungsweise des Objekts in der gewünschten Schnittebene, zu der Kameravorrichtung gewählt werden.

Somit ergibt sich der Vorteil, dass nur ein Objekt, welches sich in der vorbestimmten Schnittebene befindet, auf dem resultierenden Abbild mit einem vorbestimmten Helligkeitswert und/oder hervorgehoben dargestellt ist. Die restliche Umgebung, also Objekte, welche sich in anderen Schnittebenen befinden, sind hingegen ausgeblendet, also nicht dargestellt. Dass Objekte, die sich in anderen als der gewünschten Schnittebene befinden, ausgeblendet oder nicht dargestellt werden, ergibt insbesondre durch das zeitlich begrenzte Aufnahmefenster oder Aufnahmeintervall. Neben der zeitlich abgestimmten Aufnahmezeit hilft insbesondere auch das quadratische Abstandsgesetz in Bezug auf den Lichtabfall. Dadurch können auch die vorgenannten Störeffekte in dem resultierenden Abbild vermeiden werden.

Bevorzugt kann die Steuereinrichtung auch ausgebildet sein, anhand der Dauer oder Länge des Pausenintervalls eine Entfernung des abgebildeten Objekts in der Umgebung zu bestimmten. Die Entfernung kann die Steuereinrichtung in bekannter Weise in Abhängigkeit von einer vorbestimmten Ausbreitungsgeschwindigkeit des Beleuchtungslichts in dem Lichtleitmedium und der Umgebung berechnen.

Zu der Erfindung gehören auch Ausführungsformen, durch die sich zusätzliche Vorteile ergeben.

Im Folgenden ist nun zunächst der vorgenannte Schaltbetrieb näher beschrieben. In einer Ausführungsform der Erfindung ist dazu die Steuereinrichtung in dem Schaltgetriebe ausgebildet, das Pausenintervall zwischen dem aktivierten Zustand der Beleuchtungseinrichtung und dem aktivierten Zustand der Bilderfassungseinrichtung gemäß einem vorbestimmten Schaltkriterium mit jedem Schaltvorgang zu verlängern oder zu verkürzen. Dabei werden insbesondere nur die Pausenintervalle verlängert oder verkürzt, welche durch den Ausschaltzeitpunkt der Beleuchtungseinrichtung und den direkt nachfolgenden Einschaltzeitpunkt der Bilderfassungseinrichtung eingegrenzt oder festgelegt sind. Mit Schaltvorgang im Sinne der Erfindung ist dabei ein Schaltzyklus gemeint, welcher ein Beleuchtungsintervall gefolgt von einem Pausenintervall und einem abschließenden Aufnahmeintervall umfasst.

Durch das Verändern des Pausenintervalls können somit Objekte in unterschiedlichen Schnittebenen und somit unterschiedlichen Entfernungen zu der Kameravorrichtung aufgenommen werden. Durch das Verlängern des Pausenintervalls können somit Objekte in immer weiterer Entfernung zu der Kameravorrichtung aufgenommen werden. Durch das Verkürzen können hingegen Objekte in immer näherer Entfernung zu der Kameravorrichtung aufgenommen werden. Somit können mittels der Kameravorrichtung eine Vielzahl oder mehrere Abbilder der Umgebung erfasst werden, bei welchen jeweils ein Objekt, welches sich in einer unterschiedlichen Schnittebene der Umgebung befindet, dargestellt ist. Es kann sozusagen eine Schichtaufnahme der Umgebung erfolgen. Die resultierenden Abbilder können anschließend beispielsweise zu einem dreidimensionalen Abbild der Umgebung zusammengesetzt werden.

Gemäß dem Schaltkriterium kann beispielsweise vorgesehen sein, dass das Verändern des Pausenintervalls beispielsweise bis zum Erreichen eines vorbestimmten Maximalgrenzwerts, also beispielsweise einer Maximaldauer des Pausenintervalls, oder bis zum Erreichen eines vorbestimmten Minimalgrenzwerts, das heißt einer Minimaldauer des Pausenintervalls, vorgenommen wird. Alternativ kann das Schaltkriterium auch durch eine vorbestimmte Anzahl von erfassten Abbildern begrenzt sein.

Um die Bilderfassungseinrichtung in dem Schaltbetrieb betreiben zu können, sind im Folgenden verschiedene Varianten offenbart. In einer Variante einer Ausführungsform der Erfindung ist vorgesehen, dass die Bilderfassungseinrichtung zum Schalten zwischen dem aktivierten oder aufnehmenden oder aufzeichnenden Zustand und dem deaktivierten oder nicht-aufnehmenden oder nicht-aufzeichnenden Zustand ein mechanisch bewegbares Verschlusselement umfasst. Das Verschlusselement kann auch als sogenannter "Shutter" bezeichnet werden. Dabei kann die Steuereinrichtung beispielsweise einen elektrisch steuerbaren Verschlussmechanismus des Verschlusselements ansteuern, sodass das Verschlusselement geschlossen wird, um die Bilderfassungseinrichtung in den deaktivierten Zustand zu versetzen und das Verschlusselement geöffnet wird, um die Bilderfassungseinrichtung in den aktivierten Zustand zu versetzen.

In einer weiteren Variante der Ausführungsform der Erfindung umfasst die Bilderfassungseinrichtung eine elektrisch schaltbare Schicht, die insbesondere als Folienschicht ausgebildet ist. Diese ist aus Lichteinfallsrichtung der Bilderfassungseinrichtung vor dem Bildsensor angebracht. Um die Bilderfassungseinrichtung zu schalten, ist die Steuereinrichtung nun ausgebildet, beispielsweise eine vorbestimmte elektrische Spannung an die Folienschicht bereitzustellen. In Abhängigkeit davon, ob die elektrische Spannung an der Folienschicht anliegt oder nicht kann die Folienschicht dabei entweder in einen durchsichtigen (lichtdurchlässig) oder opaken (lichtundurchlässig) Zustand geschaltet werden. Dadurch kann das Auftreffen des reflektierten Beleuchtungslicht auf den Bildsensor vermieden werden. Die Folienschicht kann beispielsweise als OLED (Organic Light Emitting Diode) oder LCD-Folie oder elektrochrome Folienschicht ausgebildet sein.

In einer weiteren Ausführungsform der Erfindung ist vorgesehen, dass die Beleuchtungseinrichtung und die Bilderfassungseinrichtung in einem vorbestimmten Abstand zueinander in einem durch das zweite Ablenkelement gebildeten Übertragungsbereich des Lichtleitmediums angeordnet sind. Bevorzugt können die Beleuchtungseinrichtung und die Bilderfassungseinrichtung dabei direkt an dem Lichtleitmedium anliegen. Dabei sind das erste und zweite Ablenkelement ausgebildet, den Abstand zwischen der Bilderfassungseinrichtung und der Beleuchtungseinrichtung zu kompensieren. Somit kann ein Schattenwurf oder eine Abschattung beim Aussenden des Beleuchtungslichts an das Objekt und Reflektieren des Beleuchtungslichts an dem Objekt in dem resultierenden Abbild vermieden werden. Wie genau die Kompensation des Abstands funktionieren kann, ist im späteren Verlauf im Zusammenhang mit der Ausgestaltung des ersten und zweiten Ablenkelements noch einmal näher beschrieben.

Bevorzugt handelt es sich bei dem Beleuchtungslicht um monochromatisches Licht. In einer weiteren Ausführungsform der Erfindungist entsprechend vorgesehen, dass die Beleuchtungseinrichtung zum Bereitstellen des Beleuchtungslichts eine Laserlichtquelle umfasst. Dadurch kann mittels der Beleuchtungseinrichtung insbesondere ein hochenergetisches und insbesondere ein schmalbandiges Beleuchtungslicht, in Form von Laserlicht bereitgestellt werden. Die Laserlichtquelle kann beispielsweise durch wenigstens eine Halbleiterlaserdiode und/oder einen in bekannter Weise ausgestalteten Laser realisiert sein. Zusätzlich oder alternativ kann das Beleuchtungslicht auch mittels einer LED-Lichtquelle mit einer oder mehreren Leuchtdioden (LED) jeweils mit oder ohne einem entsprechenden Lichtfilter bereitgestellt werden.

In einer weiteren Ausführungsform der Erfindung ist vorgesehen, dass die Beleuchtungseinrichtung ausgebildet ist, ein Beleuchtungslicht im infraroten Frequenzbereich zu erzeugen. Das heißt, die Beleuchtungseinrichtung kann insbesondere ein Beleuchtungslicht mit einer Wellenlänge zwischen 780 Nanometern und einem Millimeter bereitstellen. Dadurch befindet sich das Beleuchtungslicht insbesondere außerhalb des für einen Menschen sichtbaren Lichtspektrums.

Im Folgenden sind nun Ausgestaltungsmöglichkeiten der Ablenkelemente näher beschrieben. Bevorzugt sind die Ablenkelemente nämlich als diffraktive optische Elemente (DOE) ausgestaltet. In einer Ausführungsform der Erfindung ist insbesondere vorgesehen, dass das erste und zweite Ablenkelement als optische Gitter, insbesondere als holografische Oberflächengitter (Oberflächenhologramm) oder holografische Volumengitter (Volumenhologramm), ausgebildet sind.

Ein optisches Gitter, auch Beugungsgitter genannt, sowie dessen Wirkungsweise und Herstellungsverfahren sind allgemein bekannt. Grundsätzlich kann ein optisches Gitter durch Einarbeiten von einer oder mehreren zumindest abschnittsweise periodische Strukturen, sogenannte Gitterstrukturen oder Ablenkstrukturen, in ein Substrat realisiert sein. Mittels der Gitterstruktur kann das optische Gitter durch den physikalischen Effekt der Beugung eine Lichtlenkung, wie sie zum Beispiel von Spiegeln, Linsen oder Prismen bekannt ist, herbeiführen. Fällt Licht, das heißt fallen Lichtstrahlen, auf das optische Gitter, wobei die einfallenden Lichtstrahlen insbesondere die Bragg-Gleichung erfüllen, werden die Lichtstrahlen durch das optische Gitter gebeugt oder abgelenkt. Die Lichtlenkung kann somit insbesondere durch Interferenzerscheinungen der durch das optische Gitter gebeugten Lichtstrahlen erfolgen. Ein Beugungswinkel in welchen das Licht abgelenkt oder umgelenkt wird ist dabei insbesondere durch die Ausgestaltung der Gitterstruktur (Gittereigenschaften), wie zum Beispiel einen Gitterabstand, festgelegt.

Die Herstellung des optischen Gitters kann insbesondere mittels Belichtung des Substrats, also beispielsweise fotolithografisch oder holografisch erfolgen. In diesem Zusammenhang kann das optische Gitter dann auch als holografisches oder holografisch-optisches Gitter oder bezeichnet werden. Somit sind die Ablenkelemente als holografisch-optische Elemente ausgebildet. In der Regel sind zwei Arten von holografisch-optischen Gittern bekannt: Holografische Oberflächengitter (Surface Holographie Gratings, kurz SHG) und holografische Volumengitter (Volume Holographie Gratings, kurz VHG). Bei den holografischen Oberflächengittern kann die Gitterstruktur durch optisches Verformen einer Oberflächenstruktur des Substrats erzeugt werden. Beispiele für holografische Oberflächengitter sind sogenannte Sägezahn-oder Blazegitter. Im Gegensatz dazu kann die Gitterstruktur bei holografischen Volumengittern in das ganze Volumen oder einen Teilbereich des Volumens des Substrats eingearbeitet sein.

Als Material für das besagte Substrat zum Einarbeiten des optischen Gitters eignet sich besonders ein Polymer oder Kunststoff, insbesondere ein Fotopolymer, oder eine Folie, insbesondere eine fotosensitive Folie, zum Beispiel aus Kunststoff oder organischen Stoffen. Alternativ kann auch Glas als das Substrat verwendet werden. Vorzugsweise kann das Lichtleitmedium selbst als das Substrat zum Einarbeiten des jeweiligen optischen Gitters ausgebildet sein. Somit sind die Ablenkelemente einstückig mit dem Lichtleitmedium ausgebildet sein. Das erste und zweite Ablenkelement können somit beispielsweise direkt an einer Oberflächenstruktur des Lichtleitmediums eingearbeitet sein. Das heißt, die Ablenkstruktur kann beispielsweise in die Oberfläche oder ein Volumen des Lichtleitmediums geätzt oder gelasert sein. Somit kann das Lichtleitmedium selbst als das vorgenannte HOE ausgebildet sein. Alternativ kann das Lichtleitmedium auch als separates Element zu dem ersten und zweiten Ablenkelement ausgebildet sein. Zum Beispiel können das erste und zweite Ablenkelement in unterschiedlichen Abschnitten einer holografischen Folie oder Platte ausgebildet sein, welche an dem Lichtleitmedium befestigt wird. Zum Befestigen kann die Folie oder Platte beispielsweise an das Lichtleitmedium angeklebt sein. Alternativ kann die holografische Folie auch als Adhäsionsfolie ausgebildet sein und direkt, also ohne Klebstoff, durch molekulare Kräfte an der Oberfläche des Lichtleitmediums haften.

Bevorzugt sind die Ablenkelemente zudem auch wellenlängenselektiv oder frequenzselektiv ausgebildet. Somit kann nur Licht, insbesondere ein erster Anteil des Lichts, mit einer vorbestimmten Wellenlänge von dem Ablenkelement in einen vorbestimmten Beugungswinkel abgelenkt oder gebeugt werden. Licht, insbesondere ein zweiter Anteil des Lichts, mit einer anderen als der vorbestimmten Länge wird vorzugsweise nicht abgelenkt, oder umso weniger, je größer der Unterschied zu der vorbestimmten Wellenlänge ist. Der zweite Lichtanteil, welcher von der vorbestimmten Wellenlänge oder Optimalwellenlänge abweicht, kann folglich vorzugsweise ungehindert durch das Substrat mit dem Ablenkelement propagieren. In vorteilhafter Weise ist dieser Ablenkeffekt für die Optimalwellenlänge maximal und fällt zu längeren und kürzeren Wellenlängen hin, beispielsweise gemäß einer Gaußglocke, ab oder wird schwächer. Vorliegend kann das jeweilige Ablenkelement somit bevorzugt nur gegenüber dem mittels der Beleuchtungseinrichtung bereitgestellten Beleuchtungslicht wellenlängenselektiv oder frequenzselektiv ausgebildet sein. Somit kann vermieden werden, dass beispielsweise Licht aus der Umgebung, wie die vorgenannten Störlichter überhaupt in das Lichtleitmedium eingekoppelt und an die Bilderfassungseinrichtung zum Erzeugen des Abbilds bereitgestellt werden.

Besonders bevorzugt sind die Ablenkelemente zudem richtungsselektiv oder winkelselektiv ausgebildet. Die Richtungsselektivität bezieht sich dabei insbesondere auf einen vorbestimmten Beugungswinkel, in welchem das jeweilige Ablenkelement das auftreffende Licht aus seiner Einfallsrichtung heraus ablenkt. Das heißt, das Licht, welches auf das Ablenkelement trifft, wird aus seiner Einfallsrichtung heraus in eine vorbestimmten Ablenkrichtung abgelenkt. Der Winkel welcher sich zwischen der Einfallsrichtung und der Ablenkrichtung einstellt, wird als der Beugungswinkel bezeichnet. In vorteilhafter Weise ist dieser Ablenkeffekt für die vorbestimmte Ablenkrichtung maximal und fällt zu abweichenden Ablenkrichtungen hin, beispielsweise gemäß einer Gaußglocke, ab oder wird schwächer. Dadurch kann es auch zu einer geringfügigen Auffächerung des Beleuchtungslichts beim Ablenken durch die Ablenkelemente kommen.

Zusätzlich oder alternativ kann die Richtungsselektivität sich auch auf die Einfallsrichtung des Lichts auf das Ablenkelement beziehen. Das heißt, es kann nur Licht, insbesondere ein Anteil des Lichts, das aus einer vorbestimmten Einfallsrichtung oder Optimalrichtung, also zum Beispiel in einem vorbestimmten Einfallswinkel, auf das jeweilige Ablenkelement fällt, in einem zu der Einfallsrichtung vorbestimmten Beugungswinkel abgelenkt werden. Licht, insbesondere ein Anteil des Lichts, das aus einer anderen als der Optimalrichtung auf das jeweilige Ablenkelement fällt, wird vorzugsweise nicht abgelenkt oder umso weniger, je größer der Unterschied zu der vorbestimmten Einfallsrichtung ist. Der Lichtanteil, welcher von der Optimalrichtung abweicht, kann folglich vorzugsweise ungehindert durch also das Lichtleitmedium propagieren. In vorteilhafter Weise ist dieser Ablenkeffekt für die Optimalrichtung maximal und fällt zu spitzeren oder stumpferen Einfallswinkeln hin, beispielsweise gemäß einer Gaußglocke, ab oder wird schwächer.

In vorteilhafter Weise können die Ablenkelemente auch jeweils mehr als ein optisches Gitter, zum Beispiel zwei optische Gitter umfassen, die nebeneinander oder gestapelt angeordnet sind . Dadurch weist das jeweilige Ablenkelement somit mehr als eine Ablenkstruktur auf. Jede der Ablenkstrukturen kann dabei gegenüber einem unterschiedlichen Einfallswinkel winkelselektiv und/oder gegenüber einer unterschiedlichen Wellenlänge wellenlängenselektiv ausgebildet sein. Diese Art von holografischem Gitter wird auch als holografisches Mehrfachvolumengitter (Multiplex Volume Holographie Gratings, kurz: MVHG) bezeichnet.

In diesem Zusammenhang ist in einer weiteren Ausführungsform der Erfindung vorgesehen, dass das erste und zweite Ablenkelement jeweils eine einkoppelnde Ablenkstruktur zum Einkoppeln des Beleuchtungslichts in das Lichtleitmedium und eine auskoppelnde Ablenkstruktur zum Auskoppeln des Beleuchtungslichts aus dem Lichtleitmedium umfassen. Dabei sind die einkoppelnde Ablenkstruktur des zweiten Ablenkelements und die auskoppelnde Ablenkstruktur des ersten Ablenkelements ausgebildet, das Beleuchtungslicht in einem vorbestimmten ersten Beugungswinkel abzulenken. Hingegen sind die einkoppelnde Ablenkstruktur des ersten Ablenkelements und die auskoppelnde Ablenkstruktur des zweiten Ablenkelements ausgebildet, das Beleuchtungslicht in einem vorbestimmten von dem ersten Beugungswinkel verschiedenen zweiten Beugungswinkel abzulenken. Die Beleuchtungseinrichtung ist bevorzugt im Bereich der einkoppelnden Ablenkstruktur des zweiten Ablenkelements angeordnet. Die Bilderfassungseinrichtung ist hingegen vorzugsweise im Bereich der auskoppelnden Ablenkstruktur des zweiten Ablenkelements angeordnet.

Die Ablenkstrukturen sind somit, wie zuvor näher erläutert, gegenüber unterschiedlichen Beugungswinkeln reichtungsselektiv ausgebildet. Hierdurch ergibt sich der Vorteil, dass eine Überlagerung oder ein Interferieren des Beleuchtungslichts und des reflektierten Beleuchtungslichts bei Weiterleiten in dem Lichtleitmedium vermeiden werden kann. Zudem ergibt sich auch der Vorteil, dass der vorgenannte Versatz, also der Abstand den die Beleuchtungseinrichtung und die Bilderfassungseinrichtung zueinander aufweisen, ausgeglichen werden kann. Ein Schattenwurf durch die Beleuchtungseirichtung auf das Objekt kann also vermeiden werden.

In vorteilhafter Weise ist zusätzlich oder alternativ auch eine segmentierte Aufnahme der Umgebung mittels der Kameravorrichtung möglich. Das heißt, es können mittels einer Kameravorrichtung unterschiedliche Umgebungsbereiche, bevorzugt nicht überlappende Umgebungsbereiche, erfasst werden. Dazu ist in einer weiteren Ausführungsform der Erfindung vorgesehen, dass die Bilderfassungseinrichtung einen Bildsensor mit wenigstens zwei Detektionsbereichen aufweist und das Lichtleitmedium für jeden der Detektionsbereiche einen eigenen Ablenkbereich aufweist. Jeder der Ablenkbereiche umfasst dabei jeweils, wie zuvor beschrieben, das erste und zweite Ablenkelement. Somit ist jeder der Ablenkbereiche ausgebildet, einen zumindest bereichsweise unterschiedlichen Umgebungsbereich zu erfassen. Dazu umfassen die jeweiligen Ablenkelemente eines ersten Ablenkbereichs bevorzugt unterschiedliche Ablenkstrukturen, als beispielsweise die Ablenkelemente eines zweiten Ablenkbereichs.

Wird die Kameravorrichtung beispielsweise in einem Fahrzeug, wie beispielsweise einem Kraftfahrzeug, eingesetzt wird, kann somit mit dem ersten Ablenkbereich beispielsweise eine Fahrbahn aufgenommen werden, während mit einem zweiten Ablenkbereich gleichzeitig ein danebenliegender Fußgängerweg überwacht werden kann.

Die Erfindung betrifft auch eine Scheinwerferanordnung für ein Kraftfahrzeug umfassend eine Scheinwerferlichtquelle und die Kameravorrichtung, wie sie zuvor beschrieben wurde. Somit kann die Kameravorrichtung bevorzugt in einem vorhandenen Scheinwerfer des Kraftfahrzeugs integriert sein. Dabei ist das Lichtleitmedium bevorzugt transparent, also insbesondere aus einem transparenten Material gebildet. Als Lichtleitmedium kann somit beispielsweise eine Glasplatte oder Kunststoffplatte dienen. Das Lichtleitmedium ist dabei in eine Abstrahlrichtung der Scheinwerferlichtquelle derart vor der Scheinwerferlichtquelle angeordnet, dass die Scheinwerferlichtquelle ausgebildet ist, ein Scheinwerferlicht durch das Licht hindurch durch das Lichtleitmedium zwischen dem ersten und zweiten Objektbereich hindurch bereitzustellen. Das heißt, der Scheinwerfer des Kraftfahrzeugs kann sowohl zum Beleuchten der Fahrbahn, als auch zum Aufnehmen von Objekten in der Umgebung des Fahrzeugs genutzt werden.

Das Kraftfahrzeug ist bevorzugt als Kraftwagen, insbesondere als Personenkraftwagen oder Lastkraftwagen, oder als Personenbus oder Motorrad ausgestaltet.

Die Erfindung umfasst auch die Kombinationen der Merkmale der beschriebenen Ausführungsformen.

Im Folgenden sind Ausführungsbeispiele der Erfindung beschrieben. Hierzu zeigt:
- Fig. 1: eine schematische Darstellung eines Schnittbilds einer Kameravorrichtung aus einer Seitperspektive, mittels welcher nur ein Objekt in einer Umgebung, welches sich in einer vorbestimmten Gegenstandsebene zu der Kameravorrichtung befindet, erfasst werden kann; und
- Fig. 2: eine schematische Darstellung von zwei verschiedenen Kameravorrichtungen im Vergleich.

Bei den im Folgenden erläuterten Ausführungsbeispielen handelt es sich um bevorzugte Ausführungsformen der Erfindung. Bei den Ausführungsbeispielen stellen die beschriebenen Komponenten der Ausführungsformen jeweils einzelne, unabhängig voneinander zu betrachtende Merkmale der Erfindung dar, welche die Erfindung jeweils auch unabhängig voneinander weiterbilden. Daher soll die Offenbarung auch andere als die dargestellten Kombinationen der Merkmale der Ausführungsformen umfassen. Des Weiteren sind die beschriebenen Ausführungsformen auch durch weitere der bereits beschriebenen Merkmale der Erfindung ergänzbar.

In den Figuren bezeichnen gleiche Bezugszeichen jeweils funktionsgleiche Elemente.

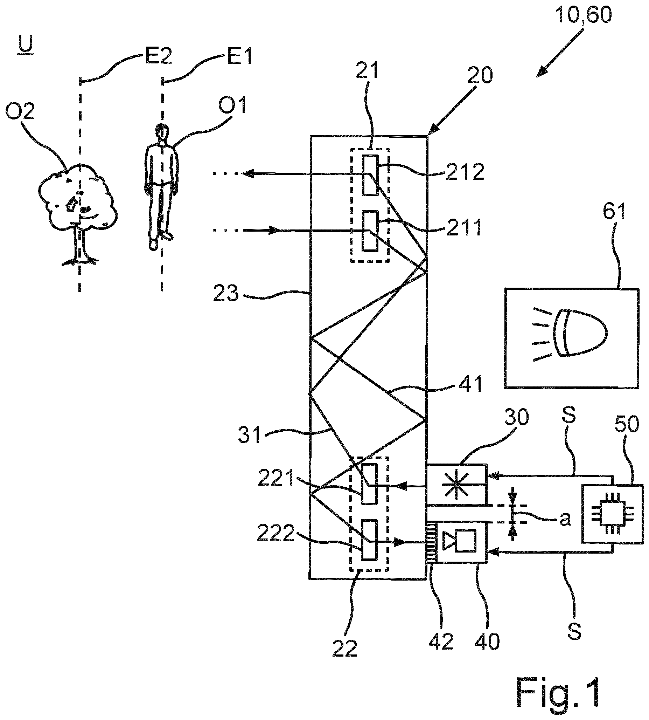

Fig. 1 zeigt eine schematische Darstellung einer Kameravorrichtung 10. Die Kameravorrichtung 10 ist dabei aus einer Seitperspektive in einer Schnittansicht dargestellt. Mittels der Kameravorrichtung 10 soll dabei insbesondere nur ein oder mehrere Objekte in der Umgebung U aufgenommen werden, die sich in einer vorbestimmten Gegenstandsebene zu der Kameravorrichtung 10 befinden. Diese Objekte sind somit auf einem resultierenden Abbild darstellbar. Ein Objekt oder Objekte, die sich in einer anderen als der vorbestimmten Gegenstandsebene befinden, sollen nicht aufgenommen werden. Diese Objekte sind auf dem resultierenden Abbild hingegen nicht dargestellt. Mit Gegenstandsebene ist dabei eine jeweilige Ebene in der Umgebung gemeint, welche in einer Aufnahmerichtung der Kameravorrichtung 10 parallel zu der Kameravorrichtung angeordnet ist.

In Fig. 1 sind beispielhaft zwei unterschiedliche Objekte O1 und O2 dargestellt. Das erste Objekt O1 ist eine Person, welche sich in einer ersten Gegenstandsebene E1 in der Umgebung befindet. Das zweite Objekt O2 ist ein Baum, welcher sich in einer zweiten Gegenstandsebene E2 in der Umgebung befindet. Die erste Gegenstandsebene E1 und somit auch das erste Objekt O1 befinden sich dabei näher an der Kameravorrichtung 10, als die zweite Gegenstandsebene E2 und das zweite Objekt O2.

Um nun die Objekte O1, O2 in Abhängigkeit von ihrer Entfernung von der Kameravorrichtung 10, welche durch die jeweilige Gegenstandsebene E1, E2 festgelegt ist, aufnehmen zu können, umfasst die Kameravorrichtung 10 eine Umlenkeinrichtung 20, eine Beleuchtungseinrichtung 30, eine Bilderfassungseinrichtung 40 und eine Steuereinrichtung 50.

Die Beleuchtungseinrichtung 30 ist vorliegend beispielhaft als Laserlichtquelle ausgebildet. Funktion der Beleuchtungseinrichtung 30 ist es, ein Beleuchtungslicht 31, vorliegend also einen Laserlichtstrahl zum Beleuchten des gewünschten Objekts O1, O2 bereitzustellen. Die Bilderfassungseinrichtung 40 ist gemäß dem Ausführungsbeispiel in Fig.1 als Fotokamera oder Videokamera ausgebildet. Die Bilderfassungseinrichtung 40 ist ausgebildet, ein reflektiertes Beleuchtungslicht 41, also einen Anteil des bereitgestellten Beleuchtungslichts 31, welcher bei Reflektion des Beleuchtungslicht 31 an dem jeweiligen Objekt O1, O2 zurückgeworfen wird, zu erfassen. Dazu kann die Bilderfassungseinrichtung 40 beispielsweise einen Bildsensor, zum Beispiel einen CMOS-Sensor oder einen CCD-Sensor aufweisen. Dieser kann das erfasste Beleuchtungslicht 41 in bekannter Weise in ein digitales Bildsignal umwandeln, durch welches das Abbild der Umgebung U kodiert ist.

Wie in Fig. 1 gezeigt, ist die Kameravorrichtung 10 als "Holocam" ausgebildet. Dadurch braucht das aufzunehmende Objekt O1, O2 nicht mehr in einer optischen Achse mit der Beleuchtungseinrichtung 30 und/oder der Bilderfassungseinrichtung 40 liegen. Die Beleuchtungseinrichtung 30 und die Bilderfassungseinrichtung 40 können somit senkrecht zu der Aufnahmerichtung der Kameravorrichtung 10 versetzt zu dem jeweiligen Objekt O1, O2 angeordnet sein. Dadurch ergeben sich insbesondere beim Einbau der Kameravorrichtung in ein Kraftahrzeug Vorteile, auf die im späteren Verlauf noch einmal näher eingegangen wird.

Um diesen Versatz zu realisieren, ist die vorgenannte Umlenkeinrichtung 20 vorgesehen. Die Umlenkeinrichtung 20 umfasst vorliegend ein als eine Glasplatte oder Glasscheibe ausgebildetes Lichtleitmedium 30 zum Weiterleiten oder Übertragen von Licht mittels interner Reflexion. In das Lichtleitmedium 20 sind entlang einer Längserstreckungsrichtung beabstandet zueinander zwei Ablenkelemente 21, 22 eingearbeitet. Funktion der Ablenkelemente ist es, das mittels der Beleuchtungseinrichtung 30 bereitgestellte Beleuchtungslicht 31 an die Umgebung umzulenken sowie das reflektierte Beleuchtungslicht 41 aus der Umgebung zu der Bilderfassungseinrichtung 40 umzulenken. Vorzugsweise sind die Ablenkstrukturen dabei frequenzselektiv für eine Wellenlänge des Beleuchtungslichts 31, 41 ausgebildet. Somit wird mittels den Ablenkelementen nur das Beleuchtungslicht 31, 41 umgelenkt. Umgebungslicht, das aus der Umgebung U auf die Ablenkstrukturen 21, 22 fällt, wird hingegen nicht abgelenkt und kann insbesondere unabgelenkt durch das Lichtleitmedium 20 hindurchpropagieren.

Die Ablenkelemente 21, 22 sind in Fig. 1 als holografisch-optische Elemente, insbesondere als holografische Mehrfachvolumengitter (Mehrfachvolumenhologramme) ausgebildet. Das heißt, jedes der Ablenkelemente 21, 22 umfasst zwei unterschiedliche Ablenkstrukturen, nämlich jeweils eine einkoppelnde Ablenkstruktur 211, 221 und eine auskoppelnde Ablenkstruktur 212, 222.

Zum Bereitstellen des Beleuchtungslichts 31 ist die Beleuchtungseinrichtung 30 direkt an einer ersten Seite des Lichtleitmediums 23 innerhalb eines von der einkoppelnden Ablenkstruktur 221 des zweiten Ablenkelements 22 gebildeten Bereichs angebracht. Zum Beispiel kann die Beleuchtungseinrichtung 30 an das Lichtleitmedium angeklebt sein. Trifft das Beleuchtungslicht 31 nun auf die einkoppelnde Ablenkstruktur 221, wird das Beleuchtungslicht 31 in einem durch eine Gittereigenschaft der Ablenkstruktur 221 bestimmten Beugungswinkel in Richtung des ersten Ablenkelements 21 abgelenkt und dadurch in das Lichtleitmedium 23 eingekoppelt. Das Lichtleitmedium 31 übertragt das eingekoppelte Beleuchtungslicht 31 nun mittels interner Totalreflexion an die auskoppelnde Ablenkstruktur 212 des ersten Ablenkelements 21. Mittels der auskoppelnden Ablenkstruktur 212 wird nun das Beleuchtungslicht 31 in einem durch eine Gittereigenschaft der Ablenkstruktur 212 bestimmten Beugungswinkel in die Umgebung U zum Beleuchten des jeweiligen Objekts O1, O2 abgelenkt und somit aus dem Lichtleitmedium 23 ausgekoppelt. Trifft das Beleuchtungslicht 31 in der Umgebung U dann auf ein Objekt O1, O2, wird das Beleuchtungslicht 31 oder zumindest ein Anteil des Beleuchtungslichts reflektiert und in Form des reflektierten Beleuchtungslichts 41 an das erste Ablenkelement 21 zurückgeworfen. Trifft das reflektierte Beleuchtungslicht 41 dabei auf die einkoppelnde Ablenkstruktur 211 des ersten Ablenkelements 21, wird das reflektierte Beleuchtungslicht 41 31 in einem durch eine Gittereigenschaft der Ablenkstruktur 211 bestimmten Beugungswinkel in Richtung des zweiten Ablenkelements 22 abgelenkt und dadurch in das Lichtleitmedium 23 eingekoppelt. Das Lichtleitmedium 31 übertragt das eingekoppelte reflektierte Beleuchtungslicht 41 wiederrum mittels interner Totalreflexion an die auskoppelnde Ablenkstruktur 222 des zweiten Ablenkelements 22. Mittels der auskoppelnden Ablenkstruktur 222 wird das reflektierte Beleuchtungslicht 41 schließlich in einem durch eine Gittereigenschaft der Ablenkstruktur 222 bestimmten Beugungswinkel in Richtung der Bilderfassungseinrichtung 40 abgelenkt und somit aus dem Lichtleitmedium 23 ausgekoppelt. Zum Erfassen des reflektierten Beleuchtungslichts 41 ist die Bilderfassungseinrichtung 40 direkt der ersten Seite des Lichtleitmediums 23 innerhalb eines von der auskoppelnden Ablenkstruktur 222 des zweiten Ablenkelements 22 gebildeten Bereichs angebracht. Zum Beispiel kann die Bilderfassungseinrichtung 40 an das Lichtleitmedium angeklebt sein. Wie in Fig. 1 gezeigt, sind die Beleuchtungseinrichtung 30 und die Bilderfassungseinrichtung 40 dadurch in Längserstreckungsrichtung des Lichtleitmediums 23 übereinander in einem Abstand a zueinander angeordnet.

Gemäß dem in Fig. 1 beschriebenen Ausführungsbeispiel entspricht die vorgenannten Gittereigenschaft der einkoppelnden Ablenkstruktur 221 dabei der Gittereigenschaft der auskoppelnden Ablenkstruktur 212. Dies ist in Fig. 1 insbesondere durch die gleichartige Schraffierung versinnbildlicht. Somit stimmen auch die jeweiligen Beugungswinkel, in welchen die einkoppelnde Ablenkstruktur 221 und die auskoppelnde Ablenkstruktur 212 das Beleuchtungslicht 31 ablenken, überein. Analog entspricht die Gittereigenschaft der einkoppelnden Ablenkstruktur 211 der Gittereigenschaft der auskoppelnden Ablenkstruktur 222. Dies ist in Fig. 1 insbesondere durch die gleichartige Schraffierung versinnbildlicht. Somit stimmen auch die jeweiligen Beugungswinkel, in welchen die einkoppelnde Ablenkstruktur 211 und die auskoppelnde Ablenkstruktur 222 das reflektierte Beleuchtungslicht 41 ablenken, überein. Folglich sind die einkoppelnden Ablenkstruktur 221 und die auskoppelnden Ablenkstruktur 212 im Vergleich zu der einkoppelnden Ablenkstruktur 211 und der auskoppelnden Ablenkstruktur 222 gegenüber verschiedenen Beugungswinkeln richtungsselektiv. Wie in Fig. 1 gezeigt, kann somit erreicht werden, dass ein Strahlenverlauf des Beleuchtungslichts 31 innerhalb des Lichtleitmediums 23 von einem Strahlenverlauf des reflektieren Beleuchtungslichts 41 abweicht. Das Beleuchtungslicht 31 wird somit im Vergleich zu dem reflektierten Beleuchtungslicht 41 unterschiedlich oft und an unterschiedlichen Stellen an einer jeweiligen Grenzfläche des Lichtleitmediums 23 total reflektiert. Ein Überlagern des Beleuchtungslichts 31 und des reflektieren Beleuchtungslichts 41 wird somit verhindert.

Zum gegenstandsebenenabhängigen Erfassen von nur einem vorbestimmten Objekt O1, O2 in der Umgebung U ist schließlich die vorgenannte Steuereinrichtung 50 vorgesehen. Vorliegend ist die Steuereinrichtung 50 beispielhaft als Mikrokontroller ausgestaltet. Die Steuereinrichtung 50 ist nun ausgebildet, die Beleuchtungseinrichtung 30 und die Bilderfassungseinrichtung in einem vorbestimmten Schaltbetrieb zu betreiben. Das heißt, die Steuereinrichtung 50 kann die Beleuchtungseinrichtung 30 zum Aussenden des Beleuchtungslichts 31 in einem oder mehreren Lichtimpulsen mit jeweils einem vorbestimmten Beleuchtungsintervall ansteuern. Weiterhin kann die Steuereinrichtung 50 zudem auch die Bilderfassungseinrichtung 40 zum Erfassen des reflektierten Beleuchtungslichts 41 nur innerhalb eines oder mehrerer vorbestimmter Aufnahmeintervalle, die einem jeweils vorangegangenen Beleuchtungsintervall zugeordnet sind, ansteuern. Wie in Fig. 1 gezeigt, umfasst die Bilderfassungseinrichtung zum Schalten dabei eine elektrisch schaltbare Folienschicht 42, die mittels der Steuereinrichtung 50 in einen transparenten oder opaken Zustand geschaltet werden kann.

Gemäß dem Schaltbetrieb erfolgen ein jeweiliges Beleuchtungsintervall und ein jeweils zugeordnetes Aufnahmeintervall bevorzugt zeitlich nacheinander. Somit ist also ein jeweiliges Pausenintervall zwischen einem jeweiligen Beleuchtungsintervall und dem zugeordneten Aufnahmeintervall vorgesehen. In dem Pausenintervall ist dabei weder die Beleuchtungseinrichtung 30 zum Bereitstellen des Beleuchtungslichts 31 noch die Bilderfassungseinrichtung 40 zum Erfassen des reflektierten Beleuchtungslichts 41 aktiviert.

Durch das Betreiben der Beleuchtungseinrichtung 30 und der Bilderfassungseinrichtung 40 in dem Schaltbetrieb kann somit während eines Schaltvorgangs nur die jeweils gewünschte Gegenstandsebene E1, E2 in der Umgebung beleuchtet werden, sodass auch nur das an dem jeweiligen sich in der gewünschten Gegenstandsebene E1, E2 befindlichen Objekts O1, O2 reflektierte Beleuchtungslicht 41 aufgenommen wird. Mit Schaltvorgang ist dabei eine Abfolge von genau einem Beleuchtungsintervall, gefolgt von einem Pausenintervall und einem abschließenden Aufnahmeintervall gemeint. Vorzugsweise kann der Schaltbetrieb insbesondere einen oder mehrere solcher Schaltvorgänge umfassen.

Welche Gegenstandsebene E1, E2 in der Umgebung U dabei mittels der Kameravorrichtung 10 beleuchtet und erfasst wird, hängt insbesondere von den Eigenschaften des Schaltbetriebs ab. Zu den Eigenschaften zählen unter andrem eine Lichtintensität des Beleuchtungslichts 31, eine Lichtleiteigenschaft des Lichtleitmediums 23 und der Umgebung U, eine Dauer des Beleuchtungsintervalls und des Aufnahmeintervalls und einer Dauer des zugeordneten Pausenintervalls. Je geringer die Lichtintensität, desto länger muss beispielsweise die Dauer des Beleuchtungsintervalls und des Aufnahmeintervalls gewählt sein, um reflektiertes Beleuchtungslicht 41 mit ausreicher Intensität an die Bilderfassungseinrichtung 40 bereitstellen zu können. Je länger die Dauer des Pausenintervalls desto weiter entfernt kann sich ein Objekt O1, O2 von der Kameravorrichtung 10 befinden. Umgekehrt gilt natürlich auch, je kürzer die Dauer des Pausenintervalls desto weiter näher muss sich das Objekt O1, O2 an der Kameravorrichtung 10 befinden.

Somit kann gemäß dem Ausführungsbeispiel in Fig.1 mittels der Kameravorrichtung 10 bei einem Schaltvorgang beispielsweise entweder das erste Objekt O1 oder das zweite Objekt O2 aufgenommen werden (in einem jeweiligen Abbild). Welches der Objekte O1, O2 aufgenommen wird, hängt dabei von der Wahl der Eigenschaften des Schaltbetriebs ab.

Sind gemäß dem Schaltbetrieb hingegen mehrere Schaltvorgänge vorgesehen, kann beispielsweise auch ein dreidimensionales Abbild der Umgebung U erzeugt werden. Dazu ist die Steuereinrichtung 50 ausgebildet, in einem Schaltvorgang die jeweilige Pausenintervalldauer in Bezug auf die Pausenintervalldauer eines vorangegangenen Schaltvorgangs zu verlängern oder zu verkürzen. Dadurch kann das reflektierte Beleuchtungslicht 41 aus unterschiedlichen Gegenstandsebenen E1, E2, wie zuvor beschrieben, erfasst werden. Die jeweils resultierenden Abbilder können dann zum Beispiel mittels der Steuereinrichtung 50 zu dem dreidimensionalen Abbild zusammengesetzt werden. Alternativ wäre somit natürlich auch die Aufnahme eines zweidimensionalen Abbilds möglich, auf welchem mehrere Objekte O1, O2 aus unterschiedlichen Gegenstandsebenen E1, E2 abgebildet sind.

Die zuvor beschriebene Kameravorrichtung 10 kann zum Beispiel in ein Kraftfahrzeug eingebaut sein. Dabei kann die Kameravorrichtung 10 beispielsweise für eine Objekterkennung genutzt werden, um Objekte auf einer Fahrbahn zu erkennen, sodass daraufhin beispielsweise eine Schutzfunktion des Kraftfahrzeugs, wie eine Notbremsung, ausgeführt werden kann. Um Bauraum bei der Anordnung der Kameravorrichtung 10 in dem Kraftfahrzeug einzusparen, kann die Kameravorrichtung 10 beispielsweise in einen Scheinwerfer des Kraftfahrzeugs integriert sein. Die Kameravorrichtung 10 kann mit einer Scheinwerferlichtquelle 61 dabei, wie in Fig. 1 gezeigt, eine Scheinwerferanordnung 60 bilden. Dabei ist das Lichtleitmedium 23 insbesondere transparent, zum Beispiel als transparente Glasplatte oder Polymerplatte, ausgestaltet. Die Kameravorrichtung 10 ist dabei mit dem Lichtleitmedium 23 in Abstrahlrichtung der Scheinwerferlichtquelle 61 vor der Scheinwerferlichtquelle 61 angeordnet. Die Scheinwerferlichtquelle befindet sich dabei insbesondere zwischen dem ersten Ablenkelement 21 und dem zweiten Ablenkelement 22. Somit kann die Scheinwerferlichtquelle 61 das Scheinwerferlicht durch das Lichtleitmedium 23 hindurch ungehindert an die Umgebung U bereitstellen, um beispielsweise die Fahrbahn für einen Fahrer auszuleuchten. Mittels der Kameravorrichtung 10 kann dabei bevorzugt gleichzeitig die Fahrbahn zum Erkennen von unerwünschten Objekten erfasst werden. Bevorzugt wird mittels der Beleuchtungseinrichtung 30 dabei das Beleuchtungslicht 31 mit einer Wellenlänge im infraroten Bereich bereitgestellt. Somit kann das Erfassen der Umgebung U mittels der Kameravorrichtung 10 für den Fahrer unsichtbar erfolgen. Die Sicht des Fahrers wird somit nicht gestört.

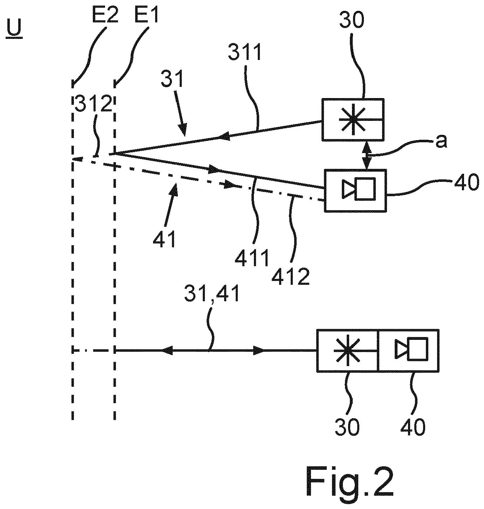

Anhand von Fig. 2 kann abschließend nochmal ein Vorteil der vorgenannten Umlenkeinheit 20 der Kameravorrichtung 10 näher beschrieben werden. Fig. 2 zeigt dabei schematisch eine Auswirkung auf die Aufnahmeeigenschaften einer Kameravorrichtung zum gegenstandsebenenabhängigen Aufnehmen von Objekten in einer Umgebung, ohne und mit der Umlenkeinheit 20.

Ohne die Umlenkeinheit 20 kann nämlich, wie es in der oberen Abbildung in Fig. 2 gezeigt ist, der vorgenannte Abstand a, den die die Beleuchtungseinrichtung 30 und Bilderfassungseinrichtung 40 (allein schon bauraumbedingt) zueinander aufweisen, nicht ausgeglichen werden. Als Resultat würde ein erster Stahlanteil 311 des Beleuchtungslichts 31 an einem Objekt in der ersten Gegenstandsebene E1 reflektiert und als erster Stahlanteil 411 des reflektierten Beleuchtungslichts 41 zu der Bilderfassungseinrichtung 40 zurückgeworfen werden. Hingegen würde ein zweiter Stahlanteil 312 des Beleuchtungslichts 31 an einem Objekt in der zweiten Gegenstandsebene E2 reflektiert und als zweiter Stahlanteil 412 des reflektierten Beleuchtungslichts 41 zu der Bilderfassungseinrichtung 40 zurückgeworfen werden. Somit würden also von einem ausgesendeten Lichtstahl des Beleuchtungslichts 31 zwei oder mehr Lichtstrahlen von reflektiertem Beleuchtungslicht 41 an der Bilderfassungseinrichtung 40 ankommen. Dadurch kann es zu unerwünschten Störeffekten auf dem resultierenden Abbild kommen. Zu den Störeffekten kann zum Beispiel eine Überbelichtung und/oder ein unerwünschter Schattenwurf zählen.

Solche Störeffekte können durch den Einsatz der Umlenkeinheit 20 vermieden werden. Eine weitere Funktion der Umlenkeinheit ist es somit, den durch den Abstand a verursachten Versatz zwischen der Beleuchtungseinrichtung 30 und der Bilderfassungseinrichtung 40 auszugleichen. Diese Funktion ist insbesondere in der unteren Abbildung in Fig. 2 schematisch dargestellt. Dabei wird sich die vorgenannte Richtungsselektivität der Ablenkstrukturen 211, 212, 221, 222 zunutze gemacht. Wie zuvor beschrieben, wird bei der Richtungsselektivität das jeweils einfallende Licht in einem durch die jeweilige Gittereigenschaft festgelegten, vorbestimmten Beugungswinkel abgelenkt. Der Beugungswinkel ist ein Winkel zwischen einem jeweils einfallenden Lichtstrahl und zugehörigen abgelenkten Lichtstrahl. In der Regel sind die Ablenkstrukturen 211, 212, 221, 222 jedoch nichtideale Systeme, sodass sich anstelle eines abgelenkten Lichtstrahls vielmehr ein Strahlfächer oder kegelförmiges Strahlenbündel ergibt. Das Beleuchtungslicht 31 und das reflektierte Beleuchtungslicht 41 werden somit bei jedem ein- und/oder auskoppeln innerhalb eines vorbestimmten Kegelwinkel oder Neigungswinkel aufgefächert. Bevorzugt beträgt der Neigungswinkel weniger als 5°, insbesondere weniger als 1°. Durch diese Auffächerung des Lichts kann somit der Versatz zwischen Beleuchtungseinrichtung 30 und Bilderfassungseinrichtung 40 ausgeglichen werden. Fig. 1 zeigt somit vielmehr eine idealisierte Darstellung des Beleuchtungslichts 31 und des reflektierten Beleuchtungslichts 41 als einzelne Lichtstrahlen.

Im Folgenden sind noch einmal die Vorteile zusammengefasst, die sich durch Nutzen der Kameravorrichtung, wie sie zuvor beschrieben wurde, ergeben. Zum einen kann ein Schattenwurf auf dem in dem resultierenden Abbild vermeiden werden, da die Beleuchtung des Objekts quasi in einer optischen Achse mit der Aufnahme erfolgt (im Folgenden auch on-axis Beleuchtung genannt). Zudem ergibt sich eine höhere Genauigkeit des Beleuchtungs- und/oder Aufnahmezeitfensters oder -Intervalls, es aufgrund der on-axis Beleuchtung keine unbekannte geometrische Weglängenänderung beim Verlauf des (reflektierten) Beleuchtungslichts ergibt. Ansonsten wäre der Einfluss eines Versatzes zwischen Beleuchtungseinrichtung und Bilderfassungseinrichtung zwischen mit zunehmendem Abstand der Kameravorrichtung zum aufzunehmenden Objekt von immer größerem Einfluss auf das resultierende Abbild. Weiterhin ergibt sich durch die Nutzung von HOEs auch der Vorteil, dass die gewünschte Wellenlänge des Beleuchtungslichts enger (kleiner) und somit besser ausgelegt werden kann (Wellenlängenselektivität). Dadurch sind auch keine zusätzlichen optischen Filter zum Filtern der Wellenlänge in der Kameravorrichtung nötig, sodass Kosten und Bauteile und somit auch zusätzliche Störeffekte (Brechungen und/oder Reflexionen) eingespart werden können. Analog sind aufgrund der Winkelselektivität von HOEs auch engere Winkelbereiche und somit die Winkelbereiche besser ausgelegt sein können. Diese Funktion ist mit klassischen optischen Bauteilen in der Regel nicht nachbildbar. Des Weiteren ist auch ein besonders flacher Aufbau der Kameravorrichtung möglich, die sich aus der nichtvorhandenen oder vernachlässigbar geringen Ausdehnung des HOEs ergibt, Somit kann ein kleineres und/oder leichteres Package oder Gehäuse für die Kameravorrichtung realisiert werden. Dies ist vor allem im automotive oder automobil Bereich relevant. Dadurch dass HOEs in einen transparenten Lichtleiter integriert werden können, der somit nur auf die vom HOE festgelegte Wellenlänge und/oder den Winkel reagiert, ergibt sich schließlich der Vorteil, dass die entsprechende Kameravorrichtung zum Beispiel im automotiv Bereich an sonst nicht möglichen Orten, wie zum Beispiel im Schweinwerfer-Bereich einsetzbar ist.

Insgesamt zeigen die Beispiele, wie eine Holocam zum Aufnehmen von Objekten, welche sich in definierten Gegenstandsebenen zu der Holocam befinden, bereitgestellt werden kann.

## Patentansprüche

1. Kameravorrichtung (10) zum Erzeugen wenigstens eines Abbilds von zumindest einem Objekt (O1, O2) in einer Umgebung (U), umfassend:
- ein Lichtleitmedium (23), welches ein erstes Ablenkelement (21) und ein zweites Ablenkelement (22) umfasst und welches ausgebildet ist, Licht mittels interner Reflexion zwischen dem ersten und zweiten Ablenkelement (21, 22) zu übertragen,
- eine Beleuchtungseinrichtung (30), die ausgebildet ist, ein Beleuchtungslicht (31) zum Beleuchten des Objekts (O1, O2) in der Umgebung (U) an das zweite Ablenkelement (22) bereitzustellen, wobei das das zweite Ablenkelement (22) ausgebildet ist, das Beleuchtungslicht (31) zum Übertragen an das erste Ablenkelement (21) in das Lichtleitmedium (23) einzukoppeln, und das erste Ablenkelement (21) ausgebildet ist, das übertragene Beleuchtungslicht (31) zum Beleuchten des Objekts aus dem Lichtleitmedium (23) auszukoppeln, und
- eine Bilderfassungseinrichtung (40), die ausgebildet ist, bei Reflexion des Beleuchtungslichts (31) an dem jeweiligen Objekt (O1, O2), das reflektierte Beleuchtungslicht (41) zu erfassen und das wenigstens eine Abbild zu erzeugen, wobei zum Bereitstellen des reflektierten Beleuchtungslichts (41) an die Bilderfassungseinrichtung (40) das erste Ablenkelement (21) ausgebildet ist, das reflektierte Beleuchtungslicht (41) zum Übertragen an das zweite Ablenkelement (22) in das Lichtleitmedium (23) einzukoppeln, und das zweite Ablenkelement (22) ausgebildet ist, das übertragene Beleuchtungslicht (41) zum Übertragen an die Bilderfassungseinrichtung (40) aus dem Lichtleitmedium (23) auszukoppeln,
**gekennzeichnet durch**
- eine Steuereinrichtung (50), die ausgebildet ist, die Beleuchtungseinrichtung (30) und die Bilderfassungseinrichtung (40) in einem vorbestimmten Schaltbetrieb zu betreiben, wobei die Beleuchtungseinrichtung (30) und die Bilderfassungseinrichtung (40) in dem Schaltbetrieb zeitlich versetzt zueinander einen aktivierten Zustand zum Bereitstellen des Beleuchtungslichts (31) und zum Erfassen des reflektierten Beleuchtungslichts (41) aufweisen.

2. Kameravorrichtung (10) nach Anspruch 1, wobei die Steuereinrichtung (50) in dem Schaltbetrieb ausgebildet ist, ein Pausenintervall zwischen einem aktivierten Zustand der Beleuchtungseinrichtung (30) und einen aktivierten Zustand der Bilderfassungseinrichtung (40), gemäß einem vorbestimmten Schaltkriterium mit jedem Schaltvorgang zu verlängern oder zu verkürzen.

3. Kameravorrichtung (10) nach einem der vorhergehenden Ansprüche, wobei die Bilderfassungseinrichtung (40) zum Schalten zwischen dem aktivierten Zustand und einem deaktivierten Zustand ein mechanisch bewegbares Verschlusselement und/oder eine elektrisch schaltbare Folienschicht (42) umfasst.

4. Kameravorrichtung (10) nach einem der vorhergehenden Ansprüche, wobei die Beleuchtungseinrichtung (30) und die Bilderfassungseinrichtung (40) in einem vorbestimmten Abstand (a) zueinander in einem durch das zweite Ablenkelement (22) gebildeten Übertragungsbereich des Lichtleitmediums (23) angeordnet sind.

5. Kameravorrichtung (10) nach einem der vorhergehenden Ansprüche, wobei die Beleuchtungseinrichtung (30) eine Laserlichtquelle zum Bereitstellen des Beleuchtungslicht (31) umfasst.

6. Kameravorrichtung (10) nach einem der vorhergehenden Ansprüche, wobei die Beleuchtungseinrichtung (30) ausgebildet ist, ein Beleuchtungslicht (31) im infraroten Frequenzbereich zu erzeugen.

7. Kameravorrichtung (10) nach einem der vorhergehenden Ansprüche, wobei das erste und zweite Ablenkelement (21, 22) als optische Gitter, insbesondere als holografische Oberflächengitter oder holografische Volumengitter, ausgebildet sind.

8. Kameravorrichtung (10) nach einem der vorhergehenden Ansprüche, wobei das erste und das zweite Ablenkelement (21, 22) jeweils eine einkoppelnde Ablenkstruktur (211, 221) zum Einkoppeln des Beleuchtungslichts (31, 41) in das Lichtleitmedium (23) und eine auskoppelnde Ablenkstruktur (212, 222) zum Auskoppeln des Beleuchtungslicht (31, 41) aus dem Lichtleitmedium (23) umfassen, und
und die einkoppelnde Ablenkstruktur (221) des zweiten Ablenkelements (22) und die auskoppelnde Ablenkstruktur (212) des ersten Ablenkelements (21) ausgebildet sind, das Beleuchtungslicht (31) in einem vorbestimmten ersten Beugungswinkel abzulenken, und
die einkoppelnde Ablenkstruktur (211) des ersten Ablenkelements (21) und die auskoppelnde Ablenkstruktur (222) des zweiten Ablenkelements (22) ausgebildet sind, das reflektierte Beleuchtungslicht (41) in einem vorbestimmten von dem ersten Beugungswinkel verschiedenen zweiten Beugungswinkel abzulenken.

9. Kameravorrichtung (10) nach einem der vorhergehenden Ansprüche, wobei die Bilderfassungseinrichtung (40) einen Bildsensor mit wenigstens zwei Detektionsbereichen aufweist und das Lichtleitmedium (23) für jeden der Detektionsbereiche einen eigenen Ablenkbereich mit dem ersten und zweiten Ablenkelement (21, 22) aufweist, wobei jeder der Ablenkbereiche ausgebildet ist, einen zumindest bereichsweise verschiedenen Umgebungsbereich der Umgebung (U) zu erfassen.

10. Scheinwerferanordnung (60) für ein Kraftfahrzeug umfassend eine Scheinwerferlichtquelle (61) und ein Kameravorrichtung (10) nach einem der vorhergehenden Ansprüche, wobei das Lichtleitmedium (23) transparent ausgebildet ist und in eine Abstrahlrichtung der Scheinwerferlichtquelle (61) derart vor der Scheinwerferlichtquelle (61) angeordnet ist, dass die Scheinwerferlichtquelle (61) ausgebildet ist, ein Scheinwerferlicht durch das Lichtleitmedium (23) zwischen ersten und dem zweiten Ablenkelement (21, 22) hindurch bereitzustellen.

## Claims

1. A camera apparatus (10) for generating at least one image representation of at least one object (01, O2) in an environment (U), comprising:
- a light guiding medium (23), which includes a first deflection element (21) and a second deflection element (22) and which is formed to transfer light between the first and the second deflection element (21, 22) by means of internal reflection,
- an illumination device (30), which is formed to provide illumination light (31) for illuminating the object (01, O2) in the environment (U) to the second deflection element (22), wherein the second deflection element (22) is formed to couple the illumination light (31) into the light guiding medium (23) for transferring to the first deflection element (21), and the first deflection element (21) is formed to couple the transferred illumination light (31) out of the light guiding medium (23) for illuminating the object, and
- an image capture device (40), which is formed, upon reflection of the illumination light (31) on the respective object (O1, O2), to capture the reflected illumination light (41) and to generate the at least one image representation, wherein for providing the reflected illumination light (41) to the image capture device (40), the first deflection element (21) is formed to couple the reflected illumination light (41) into the light guiding medium (23) for transferring to the second deflection element (22), and the second deflection element (22) is formed to couple the transferred illumination light (41) out of the light guiding medium (23) for transferring to the image capture device (40),
**characterized by**
- a control device (50), which is formed to operate the illumination device (30) and the image capture device (40) in a predetermined switching operation, wherein the illumination device (30) and the image capture device (40) have an activated state for providing the illumination light (31) and for capturing the reflected illumination light (41) offset in time to each other in the switching operation.

2. The camera apparatus (10) according to claim 1, wherein the control device (50) is formed in the switching operation to increase or reduce a pause interval between an activated state of the illumination device (30) and an activated state of the image capture device (40) according to a predetermined switching criterion with each switching procedure.

3. The camera apparatus (10) according to any one of the preceding claims, wherein the image capture device (40) includes a mechanically movable closure element and/or an electrically switchable foil layer (42) for switching between the activated state and a deactivated state.

4. The camera apparatus (10) according to any one of the preceding claims, wherein the illumination device (30) and the image capture device (40) are arranged at a predetermined distance (a) to each other in a transfer region of the light guiding medium (23) formed by the second deflection element (22).

5. The camera apparatus (10) according to any one of the preceding claims, wherein the illumination device (30) includes a laser light source for providing the illumination light (31).

6. The camera apparatus (10) according to any one of the preceding claims, wherein the illumination device (30) is formed to generate illumination light (31) in the infrared frequency range.

7. The camera apparatus (10) according to any one of the preceding claims, wherein the first and the second deflection element (21, 22) are formed as optical gratings, in particular as surface holographic gratings or volume holographic gratings.

8. The camera apparatus (10) according to any one of the preceding claims, wherein the first and the second deflection element (21, 22) each include an input coupling deflection structure (211, 221) for coupling the illumination light (31, 41) into the light guiding medium (23) and an output coupling deflection structure (212, 222) for coupling the illumination light (31, 41) out of the light guiding medium (23), and
the input coupling deflection structure (221) of the second deflection element (22) and the output coupling deflection structure (212) of the first deflection element (21) are formed to deflect the illumination light (31) at a predetermined first diffraction angle, and
the input coupling deflection structure (211) of the first deflection element (21) and the output coupling deflection structure (222) of the second deflection element (22) are formed to deflect the reflected illumination light (41) at a predetermined second diffraction angle different from the first diffraction angle.

9. The camera apparatus (10) according to any one of the preceding claims, wherein the image capture device (40) comprises an image sensor with at least two detection regions and the light guiding medium (23) comprises an own deflection region with the first and the second deflection element (21, 22) for each of the detection regions, wherein each of the deflection regions is formed to capture an environmental region of the environment (U) different at least in certain areas.

10. A headlight arrangement (60) for a motor vehicle including a headlight light source (61) and a camera apparatus (10) according to any one of the preceding claims, wherein the light guiding medium (23) is transparently formed and is arranged in front of the headlight light source (61) in a radiation direction of the headlight light source (61) such that the headlight light source (61) is formed to provide a headlight light through the light guiding medium (23) between the first and the second deflection element (21, 22).

## Revendications

1. Dispositif à caméra (10) destiné à générer au moins une image d'au moins un objet (O1, O2) dans un environnement (U), comprenant :
- un milieu de conduction de lumière (23) comprenant un premier élément de déviation (21) et un second élément de déviation (22) et configuré pour transmettre de la lumière entre les premier et second éléments de déviation (21, 22) par réflexion interne,
- un dispositif d'éclairage (30) configuré pour fournir au second élément de déviation (22) une lumière d'éclairage (31) pour éclairer l'objet (O1, O2) dans l'environnement (U), le second élément de déviation (22) étant configuré pour coupler la lumière d'éclairage (31) dans le milieu de conduction de lumière (23) afin de la transmettre au premier élément de déviation (21), et le premier élément de déviation (21) étant configuré pour coupler la lumière d'éclairage (31) transmise à l'extérieur du milieu de conduction de lumière (23) afin d'éclairer l'objet, et
- un dispositif de capture d'image (40) configuré pour capturer la lumière d'éclairage (41) réfléchie lors de la réflexion de la lumière d'éclairage (31) sur l'objet (O1, O2) respectif et pour générer la au moins une image, le premier élément de déviation (21) étant configuré pour coupler la lumière d'éclairage (41) réfléchie dans le milieu de conduction de lumière (23) pour la transmettre au second élément de déviation (22) afin de fournir la lumière d'éclairage (41) réfléchie au dispositif de capture d'image (40), et le second élément de déviation (22) étant configuré pour coupler la lumière d'éclairage (41) transmise à l'extérieur du milieu de conduction de lumière (23) pour la transmettre au dispositif de capture d'image (40),
**caractérisé par**
- un dispositif de commande (50) configuré pour faire fonctionner le dispositif d'éclairage (30) et le dispositif de capture d'image (40) dans un mode de commutation prédéterminé, le dispositif d'éclairage (30) et le dispositif de capture d'image (40) ayant un état activé pour fournir la lumière d'éclairage (31) et pour capturer la lumière d'éclairage (41) réfléchie de manière décalée dans le temps l'un par rapport à l'autre dans le mode de commutation.

2. Dispositif à caméra (10) selon la revendication 1, dans lequel, dans le mode de commutation, le dispositif de commande (50) est configuré pour augmenter ou réduire à chaque opération de commutation un intervalle de pause entre un état activé du dispositif d'éclairage (30) et un état activé du dispositif de capture d'image (40), selon un critère de commutation prédéterminé.

3. Dispositif à caméra (10) selon l'une des revendications précédentes, dans lequel le dispositif de capture d'image (40) comprend un élément de fermeture mécaniquement mobile et/ou une couche de film électriquement commutable (42) afin de commuter entre l'état activé et un état désactivé.

4. Dispositif à caméra (10) selon l'une des revendications précédentes, dans lequel le dispositif d'éclairage (30) et le dispositif de capture d'image (40) sont agencés à une distance (a) prédéterminée l'un de l'autre dans une zone de transmission du milieu de conduction de lumière (23) formée par le second élément de déviation (22).

5. Dispositif à caméra (10) selon l'une des revendications précédentes, dans lequel le dispositif d'éclairage (30) comprend une source de lumière laser pour fournir la lumière d'éclairage (31).

6. Dispositif à caméra (10) selon l'une des revendications précédentes, dans lequel le dispositif d'éclairage (30) est configuré pour générer une lumière d'éclairage (31) dans la plage de fréquences de l'infrarouge.

7. Dispositif à caméra (10) selon l'une des revendications précédentes, dans lequel les premier et second éléments de déviation (21, 22) sont réalisés sous forme de réseaux optiques, en particulier sous forme de réseaux holographiques surfaciques ou de réseaux holographiques volumiques.

8. Dispositif à caméra (10) selon l'une des revendications précédentes, dans lequel les premier et second éléments de déviation (21, 22) comprennent respectivement une structure de déviation de couplage d'entrée (211, 221) pour coupler la lumière d'éclairage (31, 41) dans le milieu de conduction de lumière (23) et une structure de déviation de couplage de sortie (212, 222) pour coupler la lumière d'éclairage (31, 41) à l'extérieur du milieu de conduction de lumière (23), et
la structure de déviation de couplage d'entrée (221) du second élément de déviation (22) et la structure de déviation de couplage de sortie (212) du premier élément de déviation (21) sont configurées de manière à dévier la lumière d'éclairage (31) avec un premier angle de diffraction prédéterminé, et
la structure de déviation de couplage d'entrée (211) du premier élément de déviation (21) et la structure de déviation de couplage de sortie (222) du second élément de déviation (22) sont configurées de manière à dévier la lumière d'éclairage (41) réfléchie avec un second angle de diffraction prédéterminé différent du premier angle de diffraction.

9. Dispositif à caméra (10) selon l'une des revendications précédentes, dans lequel le dispositif de capture d'image (40) comporte un capteur d'image avec au moins deux zones de détection et le milieu de conduction de lumière (23) comporte sa propre zone de déviation avec les premier et second éléments de déviation (21, 22) pour chacune des zones de détection, chacune des zones de déviation étant configurée pour capturer une zone environnante de l'environnement (U) différente au moins dans certaines zones.

10. Dispositif de phares (60) pour un véhicule à moteur comprenant une source de lumière de phare (61) et un dispositif à caméra (10) selon l'une des revendications précédentes, dans lequel le milieu conducteur de lumière (23) est réalisé de manière transparente et agencé devant la source de lumière de phare (61) dans une direction d'émission de la source de lumière de phare (61) de telle sorte que la source de lumière de phare (61) est configurée pour fournir une lumière de phare à travers le milieu de conduction de lumière (23) entre les premier et second éléments de déviation (21, 22).
